# EUROPÄISCHE PATENTSCHRIFT

(11) **EP 2 949 964 B1**
(45) Veröffentlichungstag und Bekanntmachung des Hinweises auf die Patenterteilung: **11.07.2018**
(21) Anmeldenummer: 15169756.2
(22) Anmeldetag: 29.05.2015
(51) Int. Cl.: F16F 15/14

(54) **FLIEHKRAFTPENDEL**
CENTRIFUGAL FORCE PENDULUM
PENDULE CENTRIFUGE

(30) Priorität: 30.05.2014 DE 102014210273
(43) Veröffentlichungstag der Anmeldung: 02.12.2015
(73) Patentinhaber: Schaeffler Technologies AG & Co. KG, 91074 Herzogenaurach (DE)
(72) Erfinder: Maienschein, Stephan, 76534 Baden-Baden (DE); Krause, Thorsten, 77815 Bühl (DE)

(56) Entgegenhaltungen:
- DE-A1-102011 010 342
- FR-A1- 2 991 739

## Beschreibung

Die Erfindung betrifft ein Fliehkraftpendel gemäß Patentanspruch 1.

Aus der DE 10 2011 101 162 A1 ist ein Fliehkraftpendel mit einem Pendelflansch und beidseitig des Pendelflanschs angeordneten Pendelmassenteilen bekannt. Die Pendelmassenteile sind mittels einer Kulissenführung mit dem Pendelflansch verbunden. Die Kulissenführung umfasst hierbei in dem Pendelflansch eine erste Ausnehmung und in den Pendelmassenteilen zweite Ausnehmungen, wobei ein Abrollelement vorgesehen ist, das sich durch die Ausnehmungen erstreckt.

Aus FR 2991739 A1 ist ein Fliehkraftpendel mit einem Pendelflansch und beidseitig des Pendelflanschs angeordneten Pendelmassenteilen bekannt, bei dem die Kulissenführung ein ballig ausgebildetes Abrollelement aufweist.

Es ist Aufgabe der Erfindung, ein verbessertes Fliehkraftpendel bereitzustellen.

Diese Aufgabe wird mittels eines Fliehkraftpendels gemäß Patentanspruch 1 gelöst. Vorteilhafte Ausführungsformen sind in den abhängigen Ansprüchen angegeben.

Erfindungsgemäß wurde erkannt, dass ein verbessertes Fliehkraftpendel dadurch bereitgestellt werden kann, dass das Fliehkraftpendel drehbar um eine Drehachse lagerbar ist, und einen Pendelflansch, wenigstens eine Pendelmasse und eine Kulissenführung aufweist. Die Kulissenführung umfasst ein mittels wenigstens eines Führungsabschnitts im Eingriff mit der Pendelmasse und dem Pendelflansch befindliches Koppelelement. Die Kulissenführung ist ausgebildet, die Pendelmasse mittels des Koppelelements mit dem Pendelflansch zu koppeln und bei Einleitung einer Drehschwingung in den Pendelflansch entlang einer Pendelbahn zu führen. Das Koppelelement umfasst umfangsseitig wenigstens im Führungsabschnitt einen in axialer Richtung erstreckenden ersten Ballenabschnitt. Der Ballenabschnitt ist konvex ausgestaltet und ausgebildet, in Berührkontakt mit der Pendelmasse und/oder dem Pendelflansch zu treten, um die Pendelmasse entlang der Pendelbahn zu führen.

Auf diese Weise können besonders schwere Pendelmassen mit dem Pendelflansch gekoppelt werden, sodass besonders hohe Drehschwingungen durch das Fliehkraftpendel getilgt werden können. Dadurch kann ein Antriebsstrang mit dem oben beschriebenen Fliehkraftpendel besonders leise ausgebildet sein.

In einer weiteren Ausführungsform weist die Pendelmasse ein erstes Pendelmassenteil und ein zweites Pendelmassenteil auf, wobei die Pendelmassenteile beidseitig des Pendelflanschs angeordnet sind und mittels des Koppelelements miteinander gekoppelt sind, und wobei der Pendelflansch ein erstes Pendelflanschteil und ein zweites in axialer Richtung zum ersten Pendelflanschteil beabstandet angeordnetes zweites Pendelflanschteil umfasst, wobei die Pendelmasse zumindest teilweise axial zwischen dem ersten und dem zweiten Pendelflanschteil angeordnet ist.

In einer weiteren Ausführungsform sind die beiden Pendelmassenteile mittels eines Stanzverfahrens herstellbar, wobei das erste Pendelmassenteil stirnseitig eine erste Werkzeugeintrittsseite und das zweite Pendelmassenteil stirnseitig eine zweite Werkzeugeintrittsseite aufweist. Das erste Pendelmassenteil weist an einem Übergang der ersten Werkzeugeintrittsseite und Innenfläche des ersten Pendelmassenteils eine erste Einformung und das zweite Pendelmassenteil an einem Übergang der zweiten Werkzeugeintrittsseite und der Innenfläche des zweiten Pendelmassenteils eine zweite Einformung auf, wobei die erste Einformung des ersten Pendelmassenteils angrenzend an die zweite Einformung des zweiten Pendelmassenteils angeordnet ist, wobei vorzugsweise wenigstens eine der Einformungen einen stetigen Krümmungsverlauf aufweist. Dadurch wird gewährleistet, dass die beiden Pendelmassenteile flächig aneinanderliegen und besonders in axialer Richtung kompakt ausgebildet sind und ihre Toleranzvorgaben erfüllen können.

In einer weiteren Ausführungsform weist das Koppelelement umfangsseitig wenigstens im Führungsabschnitt einen in axialer Richtung erstreckenden zweiten Ballenabschnitt auf, wobei der zweite Ballenabschnitt konvex ausgestaltet und ausgebildet ist, in Berührkontakt mit der Pendelmasse und/oder dem Pendelflansch zu treten, um die Pendelmasse entlang der Pendelbahn zu führen.

In einer weiteren Ausführungsform weist der erste Ballenabschnitt einen ersten Radius und einen ersten Mittelpunkt und der zweite Ballenabschnitt einen zweiten Radius und einen zweiten Mittelpunkt auf. Die Mittelpunkte sind vorzugsweise axial beabstandet auf einer parallel zur Drehachse verlaufenden Mittelpunktachse angeordnet, wobei vorzugsweise der erste Radius identisch mit dem zweiten Radius ist. Auf diese Weise wird gewährleistet, dass die Ballenabschnitte gleichzeitig in Berührkontakt mit dem Pendelflansch oder der Pendelmasse treten.

Besonders vorteilhaft ist hierbei, wenn das erste Pendelmassenteil und das zweite Pendelmassenteil axial direkt angrenzend zueinander und der erste Ballenabschnitt und der zweite Ballenabschnitt axial angrenzend angeordnet sind. Dadurch wird vermieden, dass, wenn die Pendelmassenteile mittels Stanzverfahrens hergestellt werden, Ausbrüche, Einformungen, Kanten oder Sonstiges, resultierend aus dem Stanzverfahren, nicht in Berührkontakt mit dem Koppelelement treten, und somit ein zusätzlicher Verschleiß des Fliehkraftpendels, insbesondere am Koppelelement, vermieden wird.

Besonders vorteilhaft ist hierbei, wenn wenigstens einer der Ballenabschnitte einen Radius aufweist, der einen Wert aufweist, der wenigstens in einem der folgenden Bereiche liegt: 25 mm bis 250 mm, 25 mm bis 50 mm, 25 bis 35 mm, 50 mm bis 100 mm, 100 mm bis 150 mm, 150 mm bis 200 mm, 200 mm bis 250 mm.

In einer weiteren Ausführungsform umfasst die Kulissenführung wenigstens eine im Pendelflansch und/oder in der Pendelmasse angeordnete Ausnehmung. Die Ausnehmung umfasst eine im Wesentlichen geradlinig parallel zur Drehachse erstreckende Innenfläche. Das Koppelelement durchgreift mit dem Führungsabschnitt die Ausnehmung. Dadurch schlagen bei einem Berührkontakt die Ballenabschnitte an der geradlinig ausgebildeten Innenfläche an. Dadurch kann das Führungselement besonders gut auf der Fläche abrollen, um die Pendelmasse entlang der Pendelbahn zu führen.

Besonders kostengünstig kann das Koppelelement ausgebildet werden, wenn das Koppelelement eine Verbindungsachse aufweist, die parallel zur Drehachse angeordnet ist, wobei die Ballenabschnitte rotationssymmetrisch bezogen auf die Verbindungsachse ausgebildet sind.

Nachfolgend wird die Erfindung anhand von Figuren näher erläutert. Dabei zeigen:
- Figur 1: einen Halblängsschnitt durch ein Fliehkraftpendel gemäß einer ersten Ausführungsform;
- Figur 2: eine vergrößerte Ansicht des in Figur 1 gezeigten Fliehkraftpendels;
- Figur 3: einen Halblängsschnitt durch ein Fliehkraftpendel gemäß einer zweiten Ausführungsform;
- Figur 4: eine vergrößerte Ansicht des in Figur 3 gezeigten Fliehkraftpendels;
- Figur 5: einen Halblängsschnitt durch ein Fliehkraftpendel gemäß einer dritten Ausführungsform;
- Figur 6: einen Halblängsschnitt durch ein Fliehkraftpendel gemäß einer vierten Ausführungsform;

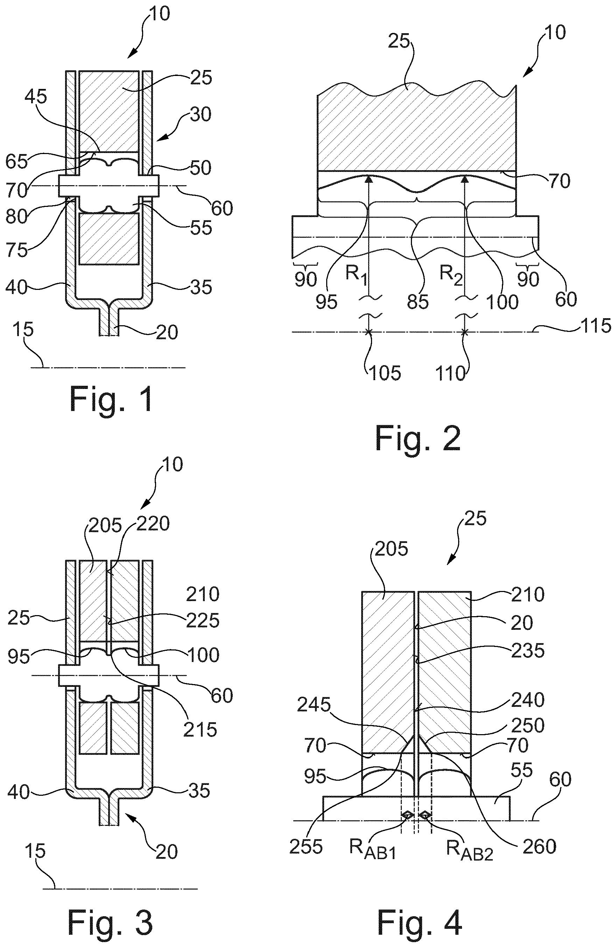

Figur 1 zeigt einen Halblängsschnitt durch ein Fliehkraftpendel 10 gemäß einer ersten Ausführungsform. Figur 2 zeigt eine vergrößerte Ansicht des in Figur 1 gezeigten Fliehkraftpendels 10. Das Fliehkraftpendel 10 ist um eine Drehachse 15 drehbar gelagert. Dabei kann das Fliehkraftpendel 10 Teil eines Antriebsstrangs (nicht dargestellt) eines Kraftfahrzeugs sein, an dem ein Hubkolbenmotor angeschlossen ist. Der Hubkolbenmotor stellt dabei ein mit Drehschwingungen versehenes Drehmoment zum Antrieb des Kraftfahrzeugs bereit. Um die Drehschwingungen zu tilgen, ist in dem Antriebsstrang das Fliehkraftpendel 10 vorgesehen.

Das Fliehkraftpendel 10 weist einen Pendelflansch 20 und eine Pendelmasse 25 auf. Die Pendelmasse 25 ist mittels einer Kulissenführung 30 mit dem Pendelflansch 20 gekoppelt. Die Kulissenführung 30 ist dabei ausgebildet, die Pendelmasse 25 entlang einer Pendelbahn (nicht dargestellt) bei Einleitung der Drehschwingung in den Pendelflansch 20 zu führen.

Der Pendelflansch 20 weist ein erstes Pendelflanschteil 35 (in Figur 1 rechtsseitig angeordnet) und ein zweites Pendelflanschteil 40 (in Figur 1 linksseitig dargestellt) auf. Die Pendelflanschteile 35, 40 sind radial innenseitig parallel aneinander angrenzend geführt. Radial außenseitig sind die Pendelflanschteile 35, 40 in axialer Richtung beabstandet zueinander angeordnet. Zwischen dem ersten Pendelflanschteil 35 und dem zweiten Pendelflanschteil 40 ist dabei die Pendelmasse 25 vorgesehen.

Die Pendelmasse 25 ist in der Ausführungsform teilringförmig in Umfangsrichtung ausgebildet. Selbstverständlich ist auch denkbar, dass die Pendelmasse 25 andersartig ausgebildet ist.

Die Kulissenführung 30 weist eine in der Pendelmasse 25 angeordnete erste Ausnehmung 45 und eine im Pendelflansch 20 angeordnete zweite Ausnehmung 50, die sich sowohl durch das erste Pendelflanschteil 35 als auch durch das zweite Pendelflanschteil 40 erstreckt, auf. Ferner umfasst die Kulissenführung 30 ein Koppelelement 55, das in der Ausführungsform als Pendelrolle ausgebildet ist. Das Koppelelement 55 umfasst eine Verbindungsachse 60, die parallel zur Drehachse 15 angeordnet ist.

Die erste Ausnehmung 45 weist eine erste Ausnehmungskontur 65 mit einer ersten Innenfläche 70 auf. Die erste Ausnehmungskontur 65 ist in der Ausführungsform beispielhaft nierenförmig ausgebildet und weist eine Krümmung mit einem Mittelpunkt auf, der radial innenseitig zur Verbindungsachse 60 angeordnet ist. Die erste Innenfläche 70 ist in axialer Richtung im Wesentlichen geradlinig ausgebildet und erstreckt sich in axialer Richtung im Wesentlichen parallel zur Drehachse 15.

Die zweite Ausnehmung 50 weist eine zweite Ausnehmungskontur 75 mit einer zweiten Innenfläche 80 auf. Die zweite Ausnehmungskontur 75 ist in der Ausführungsform ebenso nierenförmig ausgebildet und weist eine Krümmung auf, deren Mittelpunkt radial außenseitig zu der Verbindungsachse 60 angeordnet ist. Selbstverständlich ist auch denkbar, dass die Ausnehmungskonturen 65, 75 andersartig ausgebildet sind. Insbesondere ist beispielsweise denkbar, dass die Krümmungsrichtungen vertauscht sind.

Das Koppelelement 55 weist einen ersten Führungsabschnitt 85 und zwei zweite axial beidseitig des ersten Führungsabschnitts 85 angeordnete zweite Führungsabschnitte 90 auf. Der erste Führungsabschnitt 85 durchgreift dabei die erste Ausnehmung 45 in axialer Richtung und die zweiten Führungsabschnitte 90 durchgreifen jeweils die in den Pendelflanschteilen 35, 40 angeordneten zweiten Ausnehmungen 50 in axialer Richtung. Die zweiten Führungsabschnitte 90 weisen dabei einen geringeren Durchmesser auf als der erste Führungsabschnitt 85. Der erste Führungsabschnitt 85 weist in Längsrichtung einen ersten Ballenabschnitt 95 und einen an den ersten Ballenabschnitt 95 angrenzenden zweiten Ballenabschnitt 100 auf. Die Ballenabschnitte 95, 100 sind konvex ausgestaltet, wobei sich die Krümmungen der Ballenabschnitte 95, 100 in Längsrichtung erstrecken. Der erste Ballenabschnitt 95 weist eine erste Krümmung mit einem ersten Radius R₁ und einen ersten Mittelpunkt 105 und der zweite Ballenabschnitt 100 eine zweite Krümmung mit einem zweiten Radius R₂ und einen zweiten Mittelpunkt 110 auf. Die jeweilige Krümmung der Ballenabschnitte 95, 100 kann auch andersartig ausgebildet sein. Insbesondere ist denkbar, dass die Krümmung gemäß einem Polynom und/oder einer Ellipse ausgebildet ist. Der erste Mittelpunkt 105 und der zweite Mittelpunkt 110 sind auf einer Mittelpunktachse 115 angeordnet, die parallel zu der Drehachse 15 verläuft. Selbstverständlich ist auch denkbar, dass die Mittelpunkte 105, 110 unabhängig im Raum voneinander beabstandet angeordnet sind. Auch ist denkbar, dass die Mittelpunktsachse 115 schräg zur Drehachse 15 angeordnet sind. Der erste Radius R₁ ist in der Ausführungsform identisch mit dem zweiten Radius R₂. Selbstverständlich ist auch denkbar, dass die Ballenabschnitte 95, 100 Krümmungen aufweisen, die unterschiedliche Radien R₁, R₂ aufweisen.

Der zweite Führungsabschnitt 90 ist in der Ausführungsform zylindrisch ausgebildet. Selbstverständlich ist auch denkbar, dass der zweite Führungsabschnitt 90 ebenso wie der erste Führungsabschnitt 85 ballenartig ausgebildet ist. Der zweite Führungsabschnitt 90 greift dabei in die zweite Ausnehmung 50 ein und koppelt das Koppelelement 55 mit dem Pendelflansch 20. Die beiden zweiten Ausnehmungen 50 sind hierbei in den jeweiligen Pendelflanschteilen 35, 40 identisch ausgebildet.

Besonders vorteilhaft ist in der Ausführungsform, wenn der erste Radius und/oder der zweite Radius R₁, R₂ wenigstens einen Wert aufweisen, der in wenigstens einem der folgenden Bereiche liegt: 25 mm bis 250 mm, 25 mm bis 50 mm, 25 bis 35 mm, 50 mm bis 100 mm, 100 mm bis 150 mm, 150 mm bis 200 mm, 200 mm bis 250 mm.

In der Ausführungsform wird die Pendelmasse 25 mittels eines Stanzverfahrens hergestellt. Dadurch kann die Pendelmasse 25 besonders einfach und kostengünstig produziert werden. Nachteilig ist jedoch dabei, dass bei Koppelelementen 55 mit einem im Wesentlichen zylindrisch ausgebildeten ersten Führungsabschnitt 85 Rückstände, zum Beispiel Ränder, an der ersten Ausnehmung 45 bei einem Anschlagen des ersten Führungsabschnitts 85 an der ersten Innenfläche 70 der ersten Ausnehmung 45 den ersten Führungsabschnitt 85 beschädigen. Die Rückstände befinden sich üblicherweise an einem Übergang der ersten Innenfläche 70 zu einer Stirnfläche der Pendelmasse 25. Durch die Ballenabschnitte 95, 100 wird ein Berührkontakt des ersten Führungsabschnitts 85 an dem Übergang zwischen der ersten Innenfläche 70 und den Stirnflächen der Pendelmasse 25 vermieden, sodass auf diese Weise zum einen über die mehreren Ballenabschnitte 95, 100 hohe Energien bzw. hohe Drehschwingungen übertragen werden können und gleichzeitig ein Verschleiß des Koppelelements 55 vermieden werden kann.

Durch die Ballenabschnitte 95, 100 kann die Kulissenführung 30 besonders hohe Drehmomente bzw. Drehschwingungen zwischen dem Pendelflansch 20 und der Pendelmasse 25 durch einen Berührkontakt zwischen den Ballenabschnitten 95, 100 mit der Pendelmasse 25 entlang der Pendelbahn zu führen.

Figur 3 zeigt einen Halblängsschnitt durch ein Fliehkraftpendel 200 gemäß einer zweiten Ausführungsform. Figur 4 zeigt eine vergrößerte Ansicht des in Figur 3 gezeigten Fliehkraftpendels 200. Das Fliehkraftpendel 200 ist im Wesentlichen identisch zu dem in Figur 1 und 2 gezeigten Fliehkraftpendel 10 ausgebildet. Abweichend dazu weist die Pendelmasse 25 ein erstes Pendelmassenteil 205 und ein zweites axial angrenzend an das erste Pendelmassenteil 205 angeordnetes zweites Pendelmassenteil 210 auf. In den beiden Pendelmassenteilen 205, 210 ist die bereits in Figur 1 und 2 erläuterte erste Ausnehmung 45 vorgesehen. Dabei ist die axiale Erstreckung des ersten Ballenabschnitts 95 an die axiale Erstreckung des ersten Pendelmassenteils 205 und die axiale Erstreckung des zweiten Ballenabschnitts 100 an die axiale Erstreckung des zweiten Pendelmassenteils 210 angepasst. Dies hat zur Folge, dass eine zwischen den beiden Ballenabschnitten 95, 100 liegende Einschnürung 215 im Wesentlichen axial auf Höhe zweier aneinanderliegenden Stirnseiten 220, 225 der beiden Pendelmassenteile 205, 210 angeordnet ist.

Durch die Zuordnung des ersten Ballenabschnitts 95 dem ersten Pendelmassenteil 205 und des zweiten Ballenabschnitts 100 dem zweiten Pendelmassenteil 210 wird vermieden, dass umfangsseitig der erste Führungsabschnitt 85 in Berührkontakt mit einem Übergang zwischen der ersten Innenfläche 70 und den Stirnseiten 220, 225 tritt.

Werden die Pendelmassenteile 205, 210 mittels eines Stanzverfahrens hergestellt, so weist das erste Pendelmassenteil 205 stirnseitig eine erste Werkzeugeintrittsseite 235 und das zweite Pendelmassenteil 210 stirnseitig eine zweite Werkzeugeintrittsseite 240 auf. Dabei wird das Werkzeug von der Werkzeugeintrittsseite 235, 240 durch den Werkstoff zu der gegenüberliegenden Seite zu der Werkzeugeintrittsseite 235, 240 geführt. Dabei tritt eine plastische Verformung an den Rändern und der ersten Ausnehmung der Pendelmasse 25 auf. Die erste Werkzeugeintrittsseite 235 entspricht einer ersten Stirnseite 220 und die zweite Werkzeugeintrittsseite 240 entspricht einer zweiten Stirnseite 225. Die erste Werkzeugeintrittsseite 235 liegt flächig an der zweiten Werkzeugeintrittsseite 240 an. Somit sind die beiden Pendelmassenteile 205, 210 in montiertem Zustand mit entgegengesetzten Stanzrichtungen montiert.

Auf Grund der plastischen Verformungen weist das erste Pendelmassenteil 205 an dem Übergang 230 der ersten Werkzeugeintrittsseite 235 und der ersten Ausnehmung 45 bzw. angrenzend an die erste Innenfläche 70 des ersten Pendelmassenteils 205 eine erste Einformung 245 auf. Das Gleiche gilt auch für das zweite Pendelmassenteil 210. Auch das zweite Pendelmassenteil 210 weist an dem Übergang 230 der zweiten Werkzeugeintrittsseite 240 und der erste Innenfläche 70des zweiten Pendelmassenteils 210 eine zweite Einformung 250 auf. Die erste Einformung 245 des ersten Pendelmassenteils 205 ist axial angrenzend an die zweite Einformung 250 des zweiten Pendelmassenteils 210 angeordnet. Die Einformungen 245, 250 weisen vorteilhafterweise einen stetigen Krümmungsverlauf auf. Die Einformungen 245, 250 münden an der ersten Innenfläche 70 in einem Mündungspunkt 255, 260. Ein Mündungspunkt 255 des ersten Pendelmassenteils 205 weist einen ersten Abstand R_{AB1} zu der ersten, dem zweiten Pendelmassenteil 210 zugewandten Stirnseite 220 auf. Korrespondierend weist ein zweiter Mündungspunkt 260 des zweiten Pendelmassenteils 210 einen zweiten Abstand R_{AB2} zu der zweiten, dem ersten Pendelmassenteil 205 zugewandten Stirnseite 225 auf. Der erste und/oder zweite Abstand R_{AB1}, R_{AB2} weist einen Wert auf, der in einem Bereich von 0,05 mm bis 0,25 mm liegt..Dadurch wird im Bereich der Einbuchtung 215 und der Einformungen 245, 250 der radiale Abstand zwischen dem Koppelelement 55 und der Pendelmasse 25 weiter vergrößert, was besonders vorteilhaft für einen verschleißarmen Betrieb des Fliehkraftpendels 200 ist.

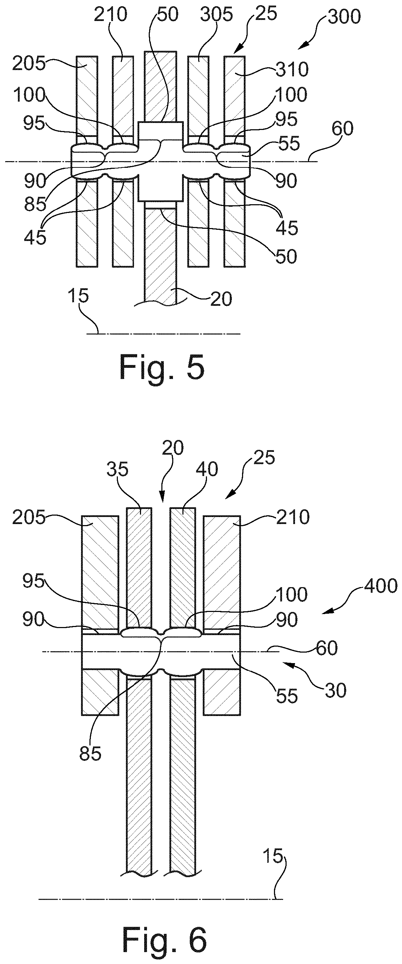

Figur 5 zeigt ein Fliehkraftpendel 300 gemäß einer dritten Ausführungsform. Das Fliehkraftpendel 300 ist ähnlich zu dem in den Figuren 1 bis 4 gezeigten Fliehkraftpendel 10, 200 ausgebildet. Abweichend dazu weist die Pendelmasse 25 vier Pendelmassenteile 205, 210, 305, 310 auf. Dabei ist zusätzlich zu dem ersten und zweiten Pendelmassenteil 205, 210, die in der Ausführungsform linksseitig des nun einstückig ausgebildeten Pendelflanschs 20 angeordnet sind, ein rechtsseitig des Pendelflanschs 20 drittes Pendelmassenteil 305 und ein viertes Pendelmassenteil 310 vorgesehen. Das dritte Pendelmassenteil 305 und das vierte Pendelmassenteil 310 sind jeweils zueinander identisch, aber auch identisch zu dem ersten und zweiten Pendelmassenteil 205, 210 ausgebildet.

Das Koppelelement 55 ist entsprechend der Ausgestaltung der Pendelmasse 25 angepasst. Der erste Führungsabschnitt 85 ist in der Ausführungsform anstatt der ballenförmigen Ausgestaltung, wie in den Figuren 1 bis 4 gezeigt, geradlinig mit einer Umfangsfläche ausgebildet, die sich im Wesentlichen parallel in axialer Richtung sich zur Drehachse 15 erstreckt. Die zweiten Führungsabschnitte 90, die links- und rechtsseitig des ersten Führungsabschnitts 85 angeordnet sind, weisen jeweils zwei Ballenabschnitte 95, 100 auf. Dabei ist jeweils ein Ballenabschnitt 95, 100 jeweils einem Pendelmasseteil 205, 210, 305, 310 zugeordnet. Für diese Zuordnung weisen die .Ballenabschnitte 95, 100 die gleiche axiale Erstreckung auf, wie die Pendelmassenteile 205, 210, 305, 310.

Weisen die Pendelmassenteile 205, 210, 305, 310 eine unterschiedliche axiale Erstreckung zueinander auf, ist eine axiale Erstreckung der zum Pendelmassenteil 205, 210, 305, 310 jeweils zugeordnete Ballenabschnitte 95, 100an die jeweilige axiale Erstreckung des Pendelmassenteils 205, 210, 305, 310 angepasst.

Es wird darauf hingewiesen, dass selbstverständlich auch der erste Führungsabschnitt 85, wie in den Figuren 1 bis 4 gezeigt, ausgebildet werden kann, sodass das Koppelelement 55 mit im ersten Führungsabschnitt 85 angeordneten Ballenabschnitten in Berührkontakt mit der zweiten Ausnehmung 50 treten kann, um die Pendelmasse 25 entlang der Pendelbahn zu führen.

Figur 6 zeigt einen Halblängsschnitt durch ein Fliehkraftpendel 400 gemäß einer vierten Ausführungsform. Das Fliehkraftpendel 400 ist ähnlich zu den in den Figuren 1 bis 5 gezeigten Fliehkraftpendeln 10, 200, 300 ausgebildet. Abweichend dazu weist die Pendelmasse 25 zweite Pendelmassenteile 205, 210 auf, die nun beidseitig des Pendelflanschs 20 angeordnet sind. Um den Pendelflansch 20 besonders steif auszubilden, weist der Pendelflansch 20, wie in den Figuren 1 und 2 gezeigt, bereits zwei Pendelflanschteile 35, 40 auf, die im Gegensatz zu den Figuren 1 bis 4 axial direkt aneinander angrenzend auch im Bereich der Pendelmasse 25 angeordnet sind. Dadurch können durch den Pendelflansch 20 besonders hohe Drehschwingungen bzw. Drehmomente abgestützt werden.

Das Koppelelement 55 ist im Wesentlichen identisch zu den Figuren 1 bis 4 ausgebildet. Abweichend dazu ist dem ersten Ballenabschnitt 95 das erste Pendelflanschteil 35 und dem zweiten Ballenabschnitt 100 das zweite Pendelflanschteil 40 zugeordnet. Dabei ist die jeweilige axiale Erstreckung des ersten Ballenabschnitts 95 bzw. des zweiten Ballenabschnitts 100 der axialen Erstreckung des ersten Pendelflanschteils 35 bzw. des zweiten Pendelflanschteils 40 angepasst. Die zweiten Führungsabschnitte 90 sind jeweils an die axiale Erstreckung der beiden Pendelmassenteile 205, 210 abgestimmt. Die zweiten Führungsabschnitte 90 greifen nun in die erste Ausnehmung 45 der Pendelmassenteile 205, 210 und der zweite Führungsabschnitt 90 durchgreift die zweite Ausnehmung 50 des Pendelflanschs 20. Auch auf diese Weise wird eine Kulissenführung 30 bereitgestellt, die besonders zuverlässig schwere Pendelmassenteile 205, 210 entlang der Pendelbahn führen kann .

Die oben beschriebenen Ausgestaltungen des Fliehkraftpendels 10, 200, 300, 400 können selbstverständlich miteinander kombiniert werden. Insbesondere ist dabei von Vorteil, dass unter der Berücksichtigung der verschiedenen Ballenabschnitte 95, 100 eine Masse der Pendelmasse 25 erhöht werden kann, ohne dass durch die zusätzliche Belastung das Koppelelement 55 überbeansprucht wird.

In den Ausführungsformen rollt das Koppelelement 55 mit den Führungsabschnitten 85, 90 jeweils an der Innenfläche 70, 80 ab, um die Pendelmasse 25 entlang einer Pendelbahn bei Einleitung einer Drehschwingung durch den Pendelflansch 20 zu führen. Selbstverständlich ist auch denkbar, dass das Koppelelement 55, beispielsweise mit den zweiten Führungsabschnitten 90 formschlüssig mit den Pendelmassen 25 (als Variante zu Figur 6) verbunden ist und somit das Koppelelement 55 als Abstandsbolzen dient. Auch ist denkbar, dass der Führungsabschnitt 85, 90 nur einen konvex ausgebildeten Ballenabschnitt 95, 100 umfasst.

### Bezugszeichenliste

- 10: Fliehkraftpendel
- 15: Drehachse
- 20: Pendelflansch
- 25: Pendelmasse
- 30: Kulissenführung
- 35: erstes Pendelflanschteil
- 40: zweites Pendelflanschteil
- 45: erste Ausnehmung
- 50: zweite Ausnehmung
- 55: Koppelelement
- 60: Verbindungsachse
- 65: erste Ausnehmungskontur
- 70: erste Innenfläche
- 75: zweite Ausnehmungskontur
- 80: zweite Innenfläche
- 85: erster Führungsabschnitt
- 90: zweiter Führungsabschnitt
- 95: erster Ballenabschnitt
- 100: zweiter Ballenabschnitt
- 105: erster Mittelpunkt
- 110: zweiter Mittelpunkt
- 115: Mittelpunktachse

- 200: Fliehkraftpendel
- 205: erstes Pendelmassenteil
- 210: zweites Pendelmassenteil
- 215: Einbuchtung
- 220: Stirnseite
- 225: Stirnseite
- 230: Übergang
- 235: erste Werkzeugeintrittsseite
- 240: zweite Werkzeugeintrittsseite
- 245: erste Einformung
- 250: zweite Einformung
- 255: Erster Mündungspunkt
- 260: Zweiter Mündungspunkt

- 300: Fliehkraftpendel
- 305: drittes Pendelmassenteil
- 310: viertes Pendelmassenteil

- 400: Fliehkraftpendel

## Patentansprüche

1. Fliehkraftpendel (10, 200; 300, 400), das drehbar um eine Drehachse (15) lagerbar ist,
- mit einem Pendelflansch (20), wenigstens einer Pendelmasse (25) und einer Kulissenführung (30),
- wobei die Kulissenführung (30) ein mittels wenigstens eines Führungsabschnitts (85, 90) im Eingriff mit der Pendelmasse (25) und dem Pendelflansch (20) befindliches Koppelelement (55) umfasst,
- wobei die Kulissenführung (30) ausgebildet ist, die Pendelmasse (25) mittels des Koppelelements (55) mit dem Pendelflansch (20) zu koppeln und bei Einleitung einer Drehschwingung in den Pendelflansch (20) entlang einer Pendelbahn zu führen,
- wobei
- das Koppelelement (55) umfangsseitig wenigstens im Führungsabschnitt (85, 90) einen in axialer Richtung erstreckenden ersten Ballenabschnitt (95, 100) aufweist,
- wobei der erste Ballenabschnitt (95, 100) konvex ausgestaltet und ausgebildet ist, in Berührkontakt mit der Pendelmasse (25) und/oder dem Pendelflansch (20) zu treten, um die Pendelmasse (25) entlang der Pendelbahn zu führen, wobei die Pendelmasse (25) ein erstes Pendelmassenteil (205) und ein zweites Pendelmassenteil (210) aufweist,
- wobei die Pendelmassenteile (205, 210) beidseitig des Pendelflanschs (20) angeordnet sind und mittels des Koppelelements (55) miteinander gekoppelt sind, wobei der Pendelflansch (20) ein erstes Pendelflanschteil (35) und ein zweites in axialer Richtung zum ersten Pendelflanschteil (205, 305) beabstandet angeordnetes zweites Pendelflanschteil (40) umfasst,
- wobei die Pendelmasse (25) zumindest teilweise axial zwischen dem ersten und dem zweiten Pendelflanschteil (35, 40) angeordnet ist, **dadurch gekennzeichnet, dass** die beiden Pendelmassenteile (205, 210, 305, 310) mittels eines Stanzverfahrens herstellbar sind,
- wobei das erste Pendelmassenteil (205) stirnseitig eine erste Werkzeugeintrittsseite (235) und das zweite Pendelmassenteil (210) stirnseitig eine zweite Werkzeugeintrittsseite (240) aufweist,
- wobei das erste Pendelmassenteil (205, 305) an einem Übergang (230) der ersten Werkzeugeintrittsseite (235) und der Innenfläche (70) des ersten Pendelmassenteils (205) eine erste Einformung (245) und das zweite Pendelmassenteil (210, 310) an einem Übergang (230) der zweiten Werkzeugeintrittsseite (240) und der Innenfläche (70) des zweiten Pendelmassenteils (210) eine zweite Einformung (250) aufweist,
- wobei die erste Einformung (245) des ersten Pendelmassenteils (205) axial angrenzend an die zweite Einformung (250) des zweiten Pendelmassenteils (210) angeordnet ist,
- wobei vorzugsweise wenigstens eine der Einformungen (245, 250) einen stetigen Krümmungsverlauf aufweist.

2. Fliehkraftpendel nach Anspruch 1,
- wobei das Koppelelement (55) umfangsseitig wenigstens im Führungsabschnitt (85, 90) einen in axialer Richtung erstreckenden zweiten Ballenabschnitt (100) aufweist,
- wobei der zweite Ballenabschnitt (100) konvex ausgestaltet und ausgebildet ist, in Berührkontakt mit der Pendelmasse (25) und/oder dem Pendelflansch (20) zu treten, um die Pendelmasse (25) entlang der Pendelbahn zu führen.

3. Fliehkraftpendel (10, 200, 300, 400) nach Anspruch 2, wobei
- der erste Ballenabschnitt (95) einen ersten Radius (R₁) und einen ersten Mittelpunkt und der zweite Ballenabschnitt (100) einen zweiten Radius (R₂) und einen zweiten zum ersten Mittelpunkt (105) unterschiedlichen zweiten Mittelpunkt (110) aufweist,
- wobei vorzugsweise die Mittelpunkte (105, 110) axial beabstandet auf einer parallel zur Drehachse (15) verlaufenden Mittelpunktsachse (115) angeordnet sind,
- wobei vorzugsweise der erste Radius (R₁) identisch mit dem zweiten Radius (R₂) ist.

4. Fliehkraftpendel (200, 300, 400) nach Anspruch 2 oder 3, wobei das erste Pendelmassenteil (205, 305) und das zweite Pendelmassenteil (210, 310) axial direkt angrenzend zueinander und der erste Ballenabschnitt (95) und der zweite Ballenabschnitt (100) axial angrenzend zueinander angeordnet sind.

5. Fliehkraftpendel (10, 200, 300, 400) nach einem der Ansprüche 1 bis 4, wobei wenigstens einer der Ballenabschnitte (95, 100) einen Radius mit einem Wert aufweist, der wenigstens in einem der folgenden Bereiche liegt: 25 mm bis 250 mm, 25 mm bis 50 mm, 25 bis 35 mm, 50 mm bis 100 mm, 100 mm bis 150 mm, 150 mm bis 200 mm, 200 mm bis 250 mm.

6. Fliehkraftpendel (10, 200, 300, 400) nach einem der Ansprüche 1 bis 5,
- wobei die Kulissenführung (30) wenigstens eine im Pendelflansch (20) und/oder in der Pendelmasse (25) angeordnete Ausnehmung (45, 50) umfasst,
- wobei die Ausnehmung (45, 50) eine im Wesentlichen geradlinig parallel zur Drehachse (15) erstreckende Innenfläche (70, 80) umfasst,
- wobei das Koppelelement (55) mit dem Führungsabschnitt (85, 90) die Ausnehmung durchgreift.

7. Fliehkraftpendel (10, 200, 300, 400) nach einem der Ansprüchen 1 bis 6, wobei das Koppelelement (55) eine Verbindungsachse (60) aufweist, die parallel zu der Drehachse (15) angeordnet ist, wobei die Ballenabschnitte (95, 100) rotationssymmetrisch bezogen auf die Verbindungsachse (60) ausgebildet ist.

## Claims

1. Centrifugal force pendulum (10, 200; 300, 400) which can be mounted rotatably about a rotational axis (15),
- having a pendulum flange (20), at least one pendulum mass (25) and a slotted guide (30),
- the slotted guide (30) comprising a coupling element (55) which is situated in engagement with the pendulum mass (25) and the pendulum flange (20) by means of at least one guide section (85, 90),
- the slotted guide (30) being configured for coupling the pendulum mass (25) to the pendulum flange (20) by means of the coupling element (55) and for guiding along a pendulum path in the case of an introduction of a torsional vibration into the pendulum flange (20),
- the coupling element (55) having, on the circumferential side at least in the guide section (85, 90), a first barrel section (95, 100) which extends in the axial direction,
- the first barrel section (95, 100) being of convex design and being configured to come into touching contact with the pendulum mass (25) and/or the pendulum flange (20), in order to guide the pendulum mass (25) along the pendulum path, the pendulum mass (25) having a first pendulum mass part (205) and a second pendulum mass part (210),
- the pendulum mass parts (205, 210) being arranged on both sides of the pendulum flange (20) and being coupled to one another by means of the coupling element (55), the pendulum flange (20) comprising a first pendulum flange part (35) and a second pendulum flange part (40) which is arranged spaced apart in the axial direction from the first pendulum flange part (205, 305),
- the pendulum mass (25) being arranged at least partially axially between the first and the second pendulum flange part (35, 40), **characterized in that** the two pendulum mass parts (205, 210, 305, 310) can be produced by means of a punching method,
- the first pendulum mass part (205) having a first tool entry side (235) on the front side, and the second pendulum mass part (210) having a second tool entry side (240) on the front side,
- the first pendulum mass part (205, 305) having a first formed recess (245) at a transition (230) of the first tool entry side (235) and the inner face (70) of the first pendulum mass part (205), and the second pendulum mass part (210, 310) having a second formed recess (250) at a transition (230) of the second tool entry side (240) and the inner face (70) of the second pendulum mass part (210),
- the first formed recess (245) of the first pendulum mass part (205) being arranged so as to axially adjoin the second formed recess (250) of the second pendulum mass part (210),
- at least one of the formed recesses (245, 250) preferably having a constant curvature progression.

2. Centrifugal force pendulum according to Claim 1,
- the coupling element (55) having, on the circumferential side at least in the guide section (85, 90), a second barrel section (100) which extends in the axial direction,
- the second barrel section (100) being of convex design and being configured to come into touching contact with the pendulum mass (25) and/or the pendulum flange (20), in order to guide the pendulum mass (25) along the pendulum path.

3. Centrifugal force pendulum (10, 200, 300, 400) according to Claim 2,
- the first barrel section (95) having a first radius (R₁) and a first centre point, and the second barrel section (100) having a second radius (R₂) and a second centre point (110) which is different from the first centre point (105),
- the centre points (105, 110) preferably being arranged spaced apart axially on a centre point axis (115) which runs parallel to the rotational axis (15),
- the first radius (R₁) preferably being identical to the second radius (R₂).

4. Centrifugal force pendulum (200, 300, 400) according to Claim 2 or 3, the first pendulum mass part (205, 305) and the second pendulum mass part (210, 310) being arranged axially directly adjacently with respect to one another, and the first barrel section (95) and the second barrel section (100) being arranged axially adjacently with respect to one another.

5. Centrifugal force pendulum (10, 200, 300, 400) according to one of Claims 1 to 4, at least one of the barrel sections (95, 100) having a radius with a value which lies at least in one of the following ranges: from 25 mm to 250 mm, from 25 mm to 50 mm, from 25 mm to 35 mm, from 50 mm to 100 mm, from 100 mm to 150 mm, from 150 mm to 200 mm, from 200 mm to 250 mm.

6. Centrifugal force pendulum (10, 200, 300, 400) according to one of Claims 1 to 5,
- the slotted guide (30) comprising at least one recess (45, 50) which is arranged in the pendulum flange (20) and/or in the pendulum mass (25),
- the recess (45, 50) comprising an inner face (70, 80) which extends substantially rectilinearly parallel to the rotational axis (15),
- the coupling element (55) reaching through the recess with the guide section (85, 90).

7. Centrifugal force pendulum (10, 200, 300, 400) according to one of Claims 1 to 6, the coupling element (55) having a connecting axis (60) which is arranged parallel to the rotational axis (15), the barrel sections (95, 100) being of rotationally symmetrical configuration in relation to the connecting axis (60).

## Revendications

1. Pendule à force centrifuge (10, 200 ; 300, 400), qui peut être supporté à rotation autour d'un axe de rotation (15),
- comprenant une bride de pendule (20), au moins une masse de pendule (25) et un guide à coulisse (30),
- le guide à coulisse (30) comprenant un élément d'accouplement (55) en prise avec la masse de pendule (25) et avec la bride de pendule (20) au moyen d'au moins une portion de guidage (85, 90),
- le guide à coulisse (30) étant réalisé de manière à accoupler la masse de pendule (25) au moyen de l'élément d'accouplement (55) à la bride de pendule (20) et à la guider lors de l'introduction d'un mouvement d'oscillation dans la bride de pendule (20) le long d'une trajectoire pendulaire,
- l'élément d'accouplement (55) présentant du côté de la périphérie au moins dans la portion de guidage (85, 90) une première portion bombée (95, 100) s'étendant dans la direction axiale,
- la première portion bombée (95, 100) étant configurée sous forme convexe et étant réalisée pour venir en contact avec la masse de pendule (25) et/ou avec la bride de pendule (20), afin de guider la masse de pendule (25) le long de la trajectoire pendulaire, la masse de pendule (25) présentant une première partie de masse de pendule (205) et une deuxième partie de masse de pendule (210),
- les parties de masse de pendule (205, 210) étant disposées des deux côtés de la bride de pendule (20) et étant accouplées l'une à l'autre au moyen de l'élément d'accouplement (55), la bride de pendule (20) comprenant une première partie de bride de pendule (35) et une deuxième partie de bride de pendule (40) disposée dans la direction axiale à distance de la première partie de bride de pendule (205, 305),
- la masse de pendule (25) étant disposée au moins en partie axialement entre la première et la deuxième partie de bride de pendule (35, 40), **caractérisé en ce que** les deux parties de masse de pendule (205, 210, 305, 310) peuvent être fabriquées au moyen d'un procédé d'estampage,
- la première partie de masse de pendule (205) présentant, du côté frontal, un premier côté d'entrée d'outil (235) et la deuxième partie de masse de pendule (210) présentant, du côté frontal, un deuxième côté d'entrée d'outil (240),
- la première partie de masse de pendule (205, 305) présentant, au niveau d'une transition (230) du premier côté d'entrée d'outil (235) et de la surface intérieure (70) de la première partie de masse de pendule (205), une première formation en creux (245) et la deuxième partie de masse de pendule (210, 310) présentant, au niveau d'une transition (230) du deuxième côté d'entrée d'outil (240) et de la surface intérieure (70) de la deuxième partie de masse de pendule (210), une deuxième formation en creux (250),
- la première formation en creux (245) de la première partie de masse de pendule (205) étant disposée en position axialement adjacente à la deuxième formation en creux (250) de la deuxième partie de masse de pendule (210),
- de préférence au moins l'une des formations en creux (245, 250) présentant une allure courbe continue.

2. Pendule à force centrifuge selon la revendication 1,
- dans lequel l'élément d'accouplement (55) présente, du côté de la périphérie, au moins dans la portion de guidage (85, 90), une deuxième portion bombée (100) s'étendant dans la direction axiale,
- la deuxième portion bombée (100) étant configurée sous forme convexe et étant réalisée de manière à venir en contact avec la masse de pendule (25) et/ou avec la bride de pendule (20) pour guider la masse de pendule (25) le long de la trajectoire pendulaire.

3. Pendule à force centrifuge (10, 200, 300, 400) selon la revendication 2, dans lequel
- la première portion bombée (95) présente un premier rayon (R₁) et un premier centre et la deuxième portion bombée (100) présente un deuxième rayon (R₂) et un deuxième centre (110) différent du premier centre (105),
- les centres (105, 110) étant de préférence disposés de manière espacée axialement sur un axe central (115) s'étendant parallèlement à l'axe de rotation (15),
- le premier rayon (R₁) étant de préférence identique au deuxième rayon (R₂).

4. Pendule à force centrifuge (200, 300, 400) selon la revendication 2 ou 3, dans lequel la première partie de masse de pendule (205, 305) et la deuxième partie de masse de pendule (210, 310) sont disposées axialement de manière directement adjacente l'une à l'autre et la première portion bombée (95) et la deuxième portion bombée (100) sont disposées axialement de manière adjacente l'une à l'autre.

5. Pendule à force centrifuge (10, 200, 300, 400) selon l'une quelconque des revendications 1 à 4, dans lequel au moins l'une des portions bombées (95, 100) présente un rayon ayant une valeur qui est située dans au moins l'une des plages suivantes : 25 mm à 250 mm, 25 mm à 50 mm, 25 à 35 mm, 50 mm à 100 mm, 100 mm à 150 mm, 150 mm à 200 mm, 200 mm à 250 mm.

6. Pendule à force centrifuge (10, 200, 300, 400) selon l'une quelconque des revendications 1 à 5,
- le guide à coulisse (30) comprenant au moins un évidement (45, 50) disposé dans la bride de pendule (20) et/ou dans la masse de pendule (25),
- l'évidement (45, 50) comprenant une surface intérieure (70, 80) s'étendant essentiellement en ligne droite parallèlement à l'axe de rotation (15),
- l'élément d'accouplement (55) venant en prise à travers l'évidement avec la portion de guidage (85, 90).

7. Pendule à force centrifuge (10, 200, 300, 400) selon l'une quelconque des revendications 1 à 6, dans lequel l'élément d'accouplement (55) présente un axe de liaison (60) qui est disposé parallèlement à l'axe de rotation (15), les portions bombées (95, 100) étant réalisées avec une symétrie de révolution par rapport à l'axe de liaison (60).
